# EUROPEAN PATENT APPLICATION

(11) **EP 1 146 240 A2**
(43) Date of publication of application: **17.10.2001**
(21) Application number: 01107942.3
(22) Date of filing: 28.03.2001
(51) Int. Cl.: F16D 7/04, F16D 9/00

(54) **Torque limiting mechanism**

(30) Priority: 29.03.2000 JP 2000090295
(71) Applicant: Kabushiki Kaisha Toyoda Jidoshokki Seisakusho, Kariya-shi, Aichi-ken (JP)
(72) Inventor: Kimura, Kazuya, Kariya-shi, Aichi-ken (JP); Shimo, Toshihisa, Kariya-shi, Aichi-ken (JP); Kawata, Takeshi, Kariya-shi, Aichi-ken (JP); Uryu, Akifumi, Kariya-shi, Aichi-ken (JP)
(74) Representative: Leson, Thomas Johannes Alois, Dipl.-Ing.

(57) **Abstract**

A torque limiting mechanism for transmitting power of an external drive source (Eg) to the drive shaft of a compressor (C). A coupler member is a spring frame that can be engaged with and disengaged from first and second engaging portions (34, 40). When the spring frame is engaged with the engaging portions, power is transmitted from a pulley to a hub. When the load on the hub is equal to or greater than a predetermined level, the engaging state between the engaging portions and the spring-frame changes such that power transmission is discontinued. Thereafter, part of the first and second engaging portions (34, 40) is destroyed such that the spring frame rotates relative to the engaging portions without interfering with the engaging portions.

## Description

The present invention relates to a torque limiting mechanism that includes a first rotor coupled to a drive source, a second rotor coupled to a driven device and a coupler member that couples the first rotor and the second rotor to each other to transmit power between the rotors and discontinues power transmission between the rotors when the load in the driven device exceeds a predetermined level.

A typical torque limiting mechanism is located in the power transmission path between a driven device such as a compressor and a drive source such as an engine and a motor and forcibly disengages the power source from the driven device when a malfunction occurs in the driven device, for example, when the device is locked. That is, the mechanism prevents the power source from being affected by an excessive load torque due to the malfunction in the driven device. Japanese Unexamined Utility Model Publication No. 63-19083 discloses an on-vehicle clutchless type compressor that has such a torque limiting mechanism. The torque limiting mechanism couples a pulley, which is coupled to an engine, to a drive shaft of a compressor by a pair of shear pins.

A power receiver is secured to the drive shaft. The shear pins project from the receiver. The pins are engaged with holes formed in the pulley. When the load torque of the compressor increases due to, for example, a malfunction of the compressor, and stress applied to the pins exceeds a predetermined limit level due to the load torque, the pins simultaneously break to disconnect the engine from the compressor.

A torque limiting mechanisms that has no breakable couplers like pins also has been proposed. This mechanism has a pair of coupler members that are engaged with each other to couple a drive source with a driven device. When there is an excessive load torque, springs are deformed to disengage the coupler members from each other, which discontinues power transmission (for example, Japanese Unexamined Patent Publications Nos. 10-267047 and 10-252772).

Shear pins in a torque limiting mechanism are designed to break at a predetermined level of torque, or a breaking torque. However, the pins may break at a load that is smaller than the breaking torque. This is because the shear pins get gradually fatigued by stresses due to repetitive fluctuation of normal load torque, which is smaller than the breaking torque, and, as a result, the level of limit stress, at which the shear pine are broken, is gradually lowered. To prevent such undesired breaking due to fatigue, the diameter of each shear pin may be increased. However, if the diameter is increased, it is difficult to cause a new shear pin, which is not fatigued, to break at a desired breaking torque.

A torque limiting mechanism that has breakable members requires no means to maintain a discontinuation of power transmission. However, a torque limiting mechanism that has two coupler members requires means for maintaining a discontinuation of power transmission, which complicates the structure. Also, when springs are used in a mechanism, resonance is likely to occur. Resonance increases torque fluctuations and thus produces noise.

Accordingly, it is a first objective of the present invention to provide a torque limiting mechanism that reduces variations of a level of load torque at which power transmission is discontinued and maintains discontinuation of power transmission with a simple structure.

A second objective of the present invention is to provide a torque limiting mechanism that suppresses vibration.

To achieve the foregoing and other objectives and in accordance with the purpose of the present invention, a torque limiting mechanism is provided. The mechanism includes a first rotor coupled to a drive source, a first engaging portion provided at the first rotor, a second rotor coupled to a driven device, a second engaging portion provided at the second rotor and a coupler member that couples the first rotor to the second rotor such that power is transmitted between the rotors. When the load on the second rotor is equal to or greater then a predetermine level, the coupler member discontinues power transmission. The coupler member is a spring member that can be engaged with and disengaged from the first and second engaging portions. When the spring member is engaged with the first and second engaging portions, power is transmitted from the first rotor to the second rotor. When the load on the second rotor is equal to or greater than the predetermined level, the engaging state between the engaging portions and the spring member changes such that the power transmission is discontinued. Thereafter, a part of the first and second engaging portions is destroyed such that the spring member rotates relative to the engaging portions without interfering with the engaging portions.

Other aspects and advantages of the invention will become apparent from the following description, taken in conjunction with the accompanying drawings, illustrating by way of example the principles of the invention.

The invention, together with objects and advantages thereof, may best be understood by reference to the following description of the presently preferred embodiments together with the accompanying drawings in which:
Fig. 1(a) is a front view illustrating a torque limiting mechanism according to a first embodiment of the present invention;
Fig. 1(b) is a cross-sectional view taken along line 1b-1b of Fig. 1(a);
Fig. 2 is a side view illustrating a compressor according to a first embodiment of the present invention;
Fig. 3(a) is a diagram showing the operation of the torque limiting mechanism of Fig. 1(a);
Fig. 3(b) is a partial enlarged view of Fig. 3(a);
Fig. 4(a) is a front view illustrating one of the leaf springs in the mechanism of Fig. 1(a);
Fig. 4(b) is a plan view of the spring shown in Fig. 4(a)
Fig. 5 is a front view illustrating a torque limiting mechanism according to a second embodiment of the present invention;
Fig. 6 is a cross-sectional view taken along line 6-6 of Fig. 5;
Fig. 7a is a front view illustrating a spring frame according to a third embodiment of the present invention; and
Fig. 7b is a bottom view of the spring frame shown in Fig. 7a.

A torque limiting mechanism according to a first embodiment of the present invention will now be described. The mechanism is used in a driven device, which is a compressor 10 in this embodiment.

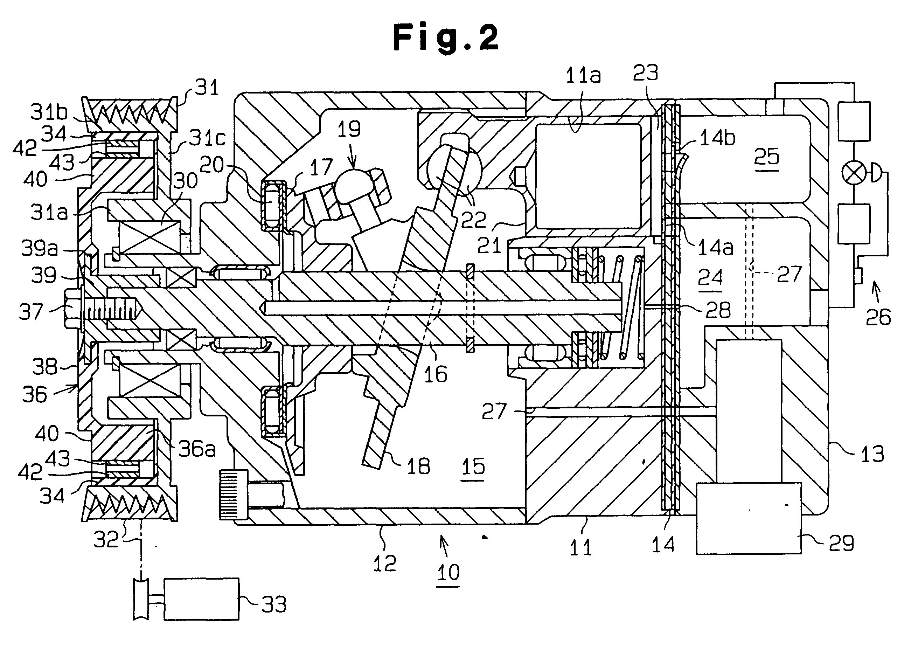

As shown in Fig. 2, the compressor 10 includes a cylinder block 11, front housing member 12 and a rear housing member 13. The front housing member 12 is secured to the front end face of the cylinder block 11. The rear housing member 13 is secured to the rear end face of the cylinder block 11, and a valve plate 14 is located between the rear housing member 13 and the rear end face. The housing members 12, 13 and the cylinder block 11 are fastened to one another by several bolts. The cylinder block 11 and the front housing member 12 define a crank chamber 15.

A drive shaft 16 extends through the crank chamber 15 and is rotatably supported by the front housing member 12 and the cylinder block 11. A rotating support body (lug plate) 17 is secured to the drive shaft 16 and is located in the crank chamber 15. A cam plate, which is a swash plate 18 in this embodiment, and a hinge mechanism 19 are also located in the crank chamber 15. The hinge mechanism 19 is located between the lug plate 17 and the swash plate 18. The lug plate 17 is supported by the inner wall of the front housing member 12 through a thrust bearing 20. The swash plate 18 is supported by the drive shaft 16 to slide axially and to incline. The lug plate 17 and the hinge mechanism 19 permit the swash plate 18 to rotate integrally with the drive shaft 16.

Cylinder bores 11a (only one is shown) are formed in the cylinder block 11. The cylinder bores 11a are arranged at equal angular intervals about the drive shaft 16. A single-headed piston 21 is housed in each cylinder bore 11a. The end face of each piston 21 and the valve plate 14 define a compression chamber 23 in the associated cylinder bore 11a. The front portion of each piston 21 is coupled to the swash plate 18 by a pair of shoes 22. Therefore, when the swash plate 18 rotates integrally with the drive shaft, 16, rotation of the swash plate 18 reciprocates each piston 21 in the associated cylinder bore 11a.

A suction chamber 24 and an annular discharge chamber 25 are defined in the rear housing member 13. The discharge chamber 25 surrounds the suction chamber 24. The suction chamber 24 is connected to the discharge chamber 25 through an external refrigerant circuit 26. Suction ports and discharge ports are formed in the valve plate 14. Each pair of suction port and discharge port corresponds to one of the compression chambers 23. Suction valve flaps 14a and discharge valve flaps 14b are formed in the valve plate 14. Each suction valve flap 14a corresponds to one of the suction ports, and each discharge valve flap 14b corresponds to one of the discharge ports. As each piston 21 moves from the top dead center position to the bottom dead center position, refrigerant gas is drawn into the associated compression chamber. As the piston 21 moves from the bottom dead center position to the top dead center position, the gas is compressed and discharged to the discharge chamber 25.

A supply passage 27 and a bleed passage 28 are formed in the cylinder block 11, the valve plate 14 and the rear housing member 13. The supply passage 27 connects the crank chamber 15 to the discharge chamber 25. The bleed passage 28, which has an orifice, connects the crank chamber 15 with the suction chamber 24. A control valve 29 regulates the supply passage 27. The control valve 29 has the same structure as, for example, a control valve that is disclosed in Japanese Unexamined Patent Publication No. 6-123281. The control valve 29 includes a diaphragm and a valve mechanism (neither is shown). The diaphragm is displaced in accordance with a suction pressure. The valve mechanism adjusts the opening of the supply passage 27 according to the displacement of the diaphragm.

When the pressure in the suction chamber 24 is lower than a predetermined level, the diaphragm is displaced such that the supply passage 27 is opened. When the pressure in the suction chamber 24 is higher than the predetermined level, the diaphragm is displaced such that the supply passage 27 is closed. The control valve 29 controls the crank chamber pressure Pc to adjust the displacement of the compressor 10. Specifically, when the pressure in the suction chamber 24 is relatively low, the control valve 29 is opened relatively widely, which raises the crank chamber pressure Pc. Accordingly, the inclination angle of the swash plate 18 (the angle defined by the swash plate 18 and an imaginary plane that is perpendicular to the drive shaft 16) is decreased and the stroke of each piston 21 is decreased. As a result, the compressor displacement is decreased. When the pressure in the suction chamber 24 is relatively high, the control valve 29 is opened relatively narrowly, which lowers the crank chamber pressure Pc. Accordingly, the inclination angle of the swash plate 18 is increased. As a result, the stroke of each piston 21 is increased and the compressor displacement is increased.

The torque limiting mechanism will now be described. The front housing member 12 has a cylindrical wall extending forward. The front end of the drive shaft 16 is located in the cylindrical wall of the front housing member 12. A first rotor, which is a pulley 31 in this embodiment, is rotatably supported by the cylindrical wall through an angular bearing 30. The pulley 31 is coupled to a drive source, which is a vehicle engine 33 in this embodiment, by a belt 32.

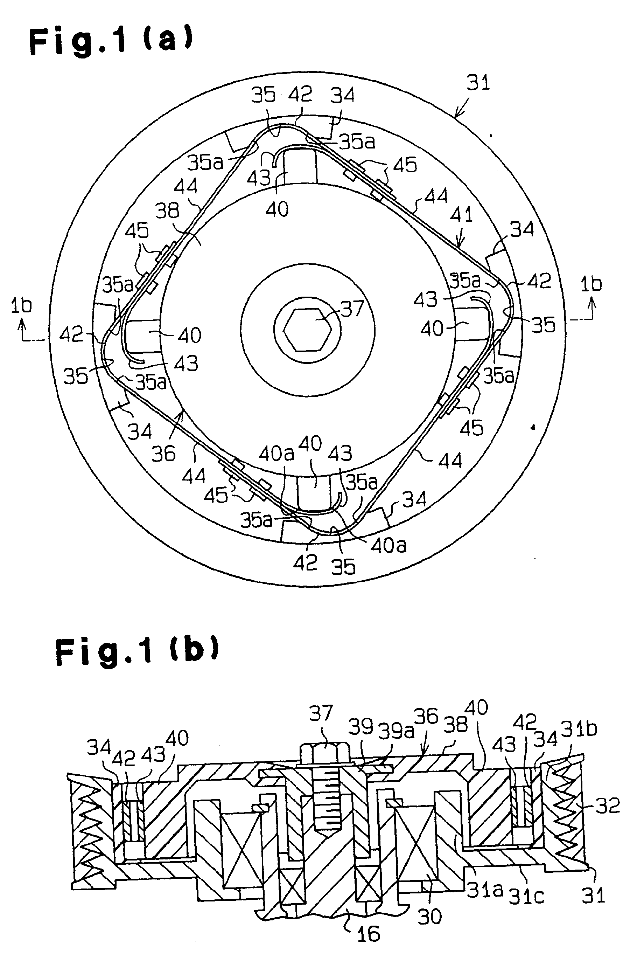

As shown in Figs. 1(b) and 2, the pulley 31 includes an inner cylinder 31a, which is attached to the outer ring of the angular bearing 30, an outer ring 31b, which is engaged with the belt 32 and a disk portion 31c, which couples the inner cylinder 31a with the outer ring 31b. First engaging portions 34, the number of which is four in this embodiment, are located on the inner surface of the outer ring 31b. The first engaging portions 34 are made of an elastic material (rubber) and are arranged at equal angular intervals. Each first engaging portion 34 is attached to the pulley 31 by glue or a screw and has a recess 35, which faces the center of the pulley 31. Each recess 35 has a pair of flat surfaces 35a, which are perpendicular to each other.

A second rotor, which is a hub 36 in this embodiment, is secured to the front end of the drive shaft 16 by a bolt 37. The hub 36 rotates integrally with the drive shaft 16. The hub 36 has a resin main body 38 and an iron cup 39, which is located at the center of the main body 38. The main body 38 includes a ring 36a. The cup 39 has a flange 39a at which the cup 39 is insert molded with the main body 38. The hub 36 is fixed to the drive shaft 16. The ring 36a is located between the inner cylinder 31a and the outer ring 31b of the pulley 31.

Second engaging portions 40, the number of which matches with the number of the first engaging portions 34, project from the outer surface of the ring 36a. The second engaging portions 40 are arranged at equal angular intervals. Each second engaging portion 40 is substantially shaped like a quadratic prism and has a pair of arcuate chambers 40a at the sides of the distal end. The surface of each second engaging portion 40 is treated to improve the durability.

A spring member, which is a spring frame 41 in this embodiment, is located between the pulley 31 and the hub 36. The spring frame 41 includes first torque transmission portions 42 and second torque transmission portions 43. The first torque transmission portions 42 are engaged with the first engaging portions 34, and the second torque transmission portions 43 are engaged with the second engaging portions 40. The spring frame 41 is formed by sides of equal lengths. In this embodiment, the spring frame 41 is shaped like a square. Each first torque transmission portion 42 is formed by one of the angles of the square. Each second torque transmission portion 42 projects from the inner surface of the frame 41 and is located in the vicinity of one of the first torque transmission portions 42. Each second torque transmission portion 43 extends along the circumference of the pulley 31 such that the free end is located at the trailing side in the rotational direction of the pulley 31. The curvature of the distal end of each second torque transmission portion 43 is greater than that of the proximal portion. As shown in Fig. 1(a), the spring frame 41 is installed by engaging the first transmission portions 42 with the first engaging portions 34 and the second torque transmission portions 43 with the second engaging portions 40. In this state, each second torque transmission portion 43 is deformed away from the outer surface of the hub 36 by the corresponding second engaging portion 40. In other words, the second engaging portions 40 are urged by the spring frame 41.

The first engaging portions 34, the second engaging portions 40 and the spring frame 41 couple the first and second rotors (the pulley 31 and the hub 36) to each other such that power can be transmitted between the rotors. When the load in the compressor 10 exceeds a predetermine level, the engaging portions 34, 40 and the spring frame 41 discontinues power transmission.

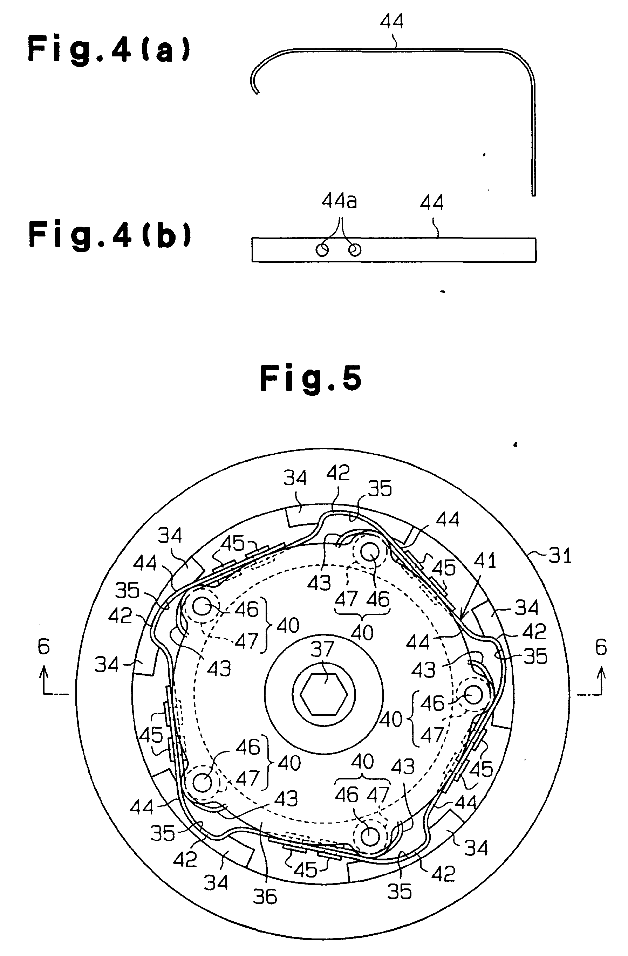

The spring frame 41 includes four leaf springs 44 that are connected to one another by rivets 45. As shown in Figs. 4(a), 4(b), each leaf spring 44 is L shaped and has one of the first torque transmission portions 42, one of the second torque transmission portions 43 and rivet holes 44a.

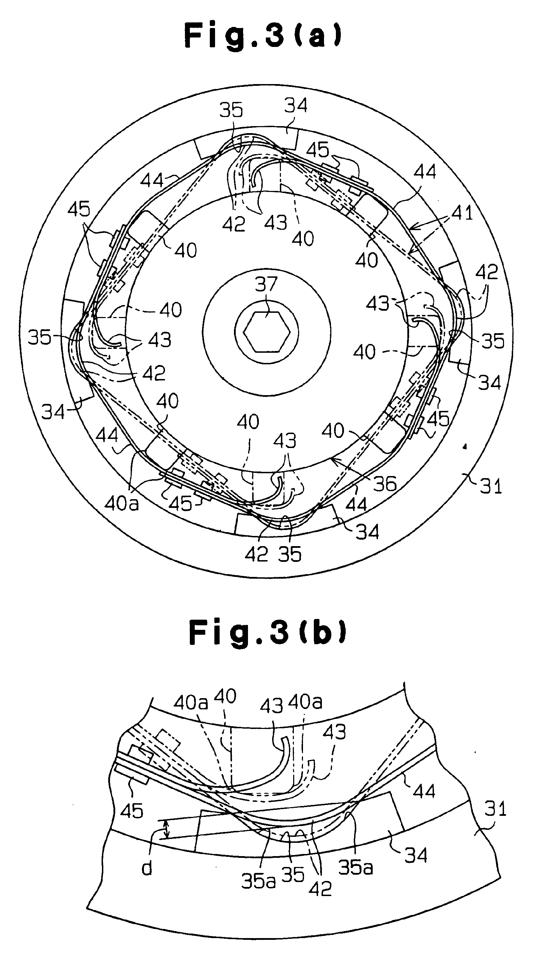

When the second engaging portions 40 are engaged with the second torque transmission portions 43 as shown in Fig. 1(a), the first torque transmission portions 42 are deeply engaged with the first engaging portions 34, which causes the leaf springs 44 to form a substantial square. The second torque transmission portions 43 have a predetermined spring constant and are deformed as shown in Fig. 3(a). When the load of the compressor 10 exceeds predetermined level, the second engaging portions 40 are disengaged from the second torque transmission members 43. The second engaging portions 40 and the second torque transmission members 43 can move relative to each other.

The operation of the above described torque limiting mechanism will now be described.

In normal operation, the power of the engine 33 is transmitted to the drive shaft 16 through the belt 32, the pulley 31, the first engaging portions 34, the spring frame 41, the second engaging portions 40 and the hub 36. At this time, torque supplied by the engine 33 is balanced with the load torque of the compressor 10, which permits the first torque transmission portions 42 to engage with the first engaging portions 34 as shown by solid lines in Fig. 1(a) and by broken lines in Figs. 3(a) and 3(b). Accordingly, the second torque transmission portions 43 are engaged with the second engaging portions 40. As a result, the pulley 31 and the drive shaft 16 rotate integrally.

As the power is transmitted to the drive shaft 16, the swash plate 18, which is attached to the drive shaft 16, reciprocates each piston 21. Accordingly, the piston 21 draws and compresses refrigerant gas. Depending on the state of the work of the pistons 21, the drive shaft 16 and the hub 36 receive load torque the direction of which is opposite relative to the rotating direction. However, as long as the load torque does not exceed a predetermined limit level and therefore does not have an unforgivable influence on the engine 33, power continues being transmitted to the drive shaft 16 through the engaging portions 34, 40, the spring frame 41, the hub 36 and the pulley 31.

When the load torque of the compressor 10 exceeds the limit level due to a malfunction of the compressor, for example, when the compressor is locked, the drive shaft 16 is stopped and the hub 36 and the pulley 31 rotate relative to each other. The second engaging portions 40 are disengaged from the second torque transmission portions 43 and rotate counterclockwise relative to the spring frame 41 as viewed in Fig. 3(a). Then, each second engaging portion 40 contacts one of the sides of the spring frame 41 and urges the spring frame 41 outward, which deforms the spring frame 41 to a shape shown by solid lines in Fig. 3(a). The shape of the deformed spring frame 41 is closer to a circle. As a result, the engage amount d between the spring frame 41 and the recesses 35 is decreased and the inclination of the spring frame 41 relative to each recess 35 is decreased. Accordingly, the contact area between each second torque transmission portion 43 and the corresponding flat surfaces 35a is decreased, which significantly lowers the torque transmission efficiency. Then, the spring frame 41 goes into a freewheeling condition while deforming the rubber first engaging portions 34, which quickly wears, or destroys, the first engaging portions 34, which are mad of rubber. Consequently, the first engaging portions 34 are worn to a point where the spring frame 41 does not interfere with the first engaging portions 34, and the spring frame 41 is completely disengaged from the first engaging portion 34.

The embodiment of Figs. 1(a) to 4(b) has the following advantages.
(1) When the load of the hub 36 is excessive, the state of the second engaging portions 40 and the spring frame 41 is changed such that the power transmission is discontinued. Thereafter, the first engaging portions 34 are destroyed. This reduces the variation of the limit torque (disengage torque) at which the torque transmission is discontinued and simplifies the mechanism that maintains the transmission discontinuance. Also, since the torque limiting mechanism is located between the drive shaft 16 of the compressor 10 and the engine 33, a malfunction such as locking of the compressor 10 does not affect the engine 33, which prevents the engine 33 from being damaged.
(2) Since the first engaging portions 34 are made of rubber, the first engaging portions 34 are smoothly destroyed when power transmission is discontinued and the spring frame 41 rotates relative to the first engaging portions 34. Therefore, after power transmission is discontinued, the torque limiting mechanism will not start transmitting power, which prevents the engine 33 from an excessive load again.
(3) The spring frame 41 is substantially shaped like a polygon. When the load of the hub 36 is excessive, each second engaging portion 40 is disengaged from the corresponding second torque transmission portion 43 and deforms the corresponding side of the spring frame 41 outward. This simplifies the structure for quickly reducing the torque transmission efficiency.
(4) Since the spring frame 41 is substantially shaped like a square, the torque transmission efficiency of the first engaging portions 34 is greatly and easily changed between the state in which the second engaging portions 40 engage with the second torque transmission portions 43 and the state in which the second engaging portions 40 engage with the sides of the spring frame 41.
(5) Since each second torque transmission portion 43 extends along the circumferential direction of the pulley 31, the contact point between the second engaging portion 40 and the corresponding second torque transmission portion 43 is moved as the load of the driven device fluctuates. The spring constant of the second torque transmission portions 43 changes, accordingly, which prevent resonance.
(6) The curvature of the distal portion of each second torque transmission portion 43 is greater than that of the proximal portion. Therefore, when the second engaging portions 40 are disengaged from the second torque transmission portions 43, the rate of torque change per unit amount of movement of each second engaging portion is greater than that in the normal operation. Therefore, the value of torque at which the second engaging portions 40 are disengaged from the second torque transmission portions 43 is constant.
(7) Each second torque transmission portion 43 is arcuate, and when power is transmitted, each second engaging portion 40 slides on the corresponding second torque transmission portion 43 at both sides of the distal end. Therefore, if the sides of the distal end of each second engaging portion 40 is worn due to an extended use, the distal end surface, which slides on the distal end of the corresponding second torque transmission portion 43 when power transmission is discontinued, is not worn. Therefore, when the second engaging portions 40 are disengaged from the second torque transmission portions 43, the deformed amount of each second torque transmission portion 43 is constant, which reduces the variation of torque at which power transmission is discontinued.
(8) The spring frame 41 is formed with the leaf springs 44, which are coupled to one another by the rivets 45. This structure reduces the width of the spring frame 41. Thus, the space for the spring frame 41 is easily formed and the size of the torque limiting mechanism is reduced. When each second engaging portion 40 is disengaged from the corresponding second torque transmission portion 43 and moves to a position for weakening the engaging force between the spring frame 41 and the first engaging portions 34, the second engaging portion 40 is engaged with one of the rivets 45, which holds the second engaging portion 40 at an optimal position. Accordingly, the spring frame 41 quickly wears the first engaging portions 34.
(9) Since the first engaging portions 34 are made of rubber, the first engaging portions 34 function as dampers and reduce torque fluctuations.
(10) The force of the spring frame 41 acts in the radial directions of the drive shaft 16 but not in the axial direction. Therefore, the fuel consumption when the compressor 10 is operating at the minimum displacement is reduced. Since the second torque transmission portions 43 can move radially relative to the hub 36, a little displacement between the axis of the hub 36 and the axis of the pulley 31 is allowed.

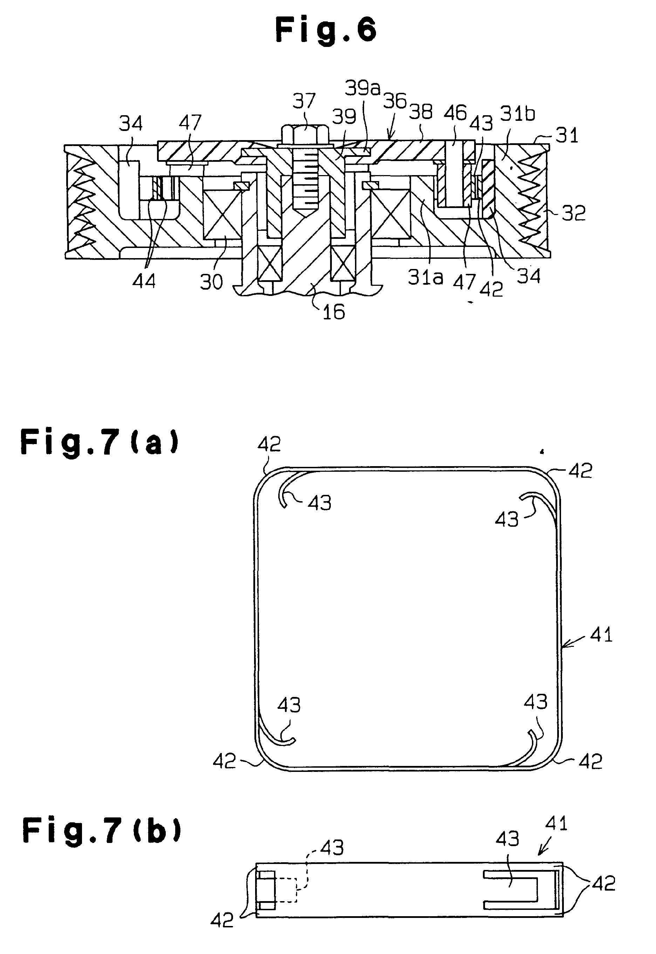

A second embodiment will now be described with reference to Figs. 5 and 6. The structure of second engaging portions 40 and the structure of a spring frame 41 are different from those in the embodiment of Figs. 1(a) to 4(b). Otherwise, the torque limiting mechanism of Figs. 5 and 6 is the same as the mechanism of Figs. 1(a) to 4(b). Like or the same reference numerals are given to those components that are like or the same as the corresponding components of the embodiment of Figs. 1(a) to 4(b).

As shown in Fig. 5, the spring frame 41 includes five leaf springs 44 that are coupled to one another by rivets 45 and is substantially shaped as a pentagon. A first torque transmission portion 42 is formed at each angle of the pentagon. To correspond to the number of the first torque transmission portions 42, there are five first engaging portions 34. A recess 35 is formed in each first engaging portion 34. Each recess 35 is engaged with the corresponding first torque transmission portion 42. The angle of each recess 35 relative to the corresponding first torque transmission portion 42 increases toward the trailing end in the rotating direction of the pulley 31.

The hub 36 does not have the ring 36a but includes five pins 46 in the peripheral portion. The pins 46 extend parallel to the drive shaft. A roller 47 is supported by each pin 46. The rollers 47 form the second engaging portions 40. In this embodiment, each second engaging portion 40 contacts the corresponding second torque transmission portion 43 at one point. When the load torque is less than a predetermined level, each roller 47 rolls on the corresponding second torque transmission portion 43 as the torque fluctuates, which prevents resonance and decreases torque fluctuation.

In addition to advantages (1)-(3), (5) and (7)-(10) of the embodiment of Figs. 1(a) to 4(b), the embodiment of Figs. 5 and 6 has the following advantages.
(11) Each second engaging portion 40 has one roller 47, which contacts the corresponding second torque transmission portion 43. Therefore, the part of each second engaging portion 40 that contacts the corresponding torque transmission portion 43 is not worn easily and therefore need not be treated to improve the durability.
(12) Each roller 47 contacts the corresponding torque transmission portion 43. Therefore, when the load fluctuates, each second engaging portions 40 move smoothly on the corresponding second torque transmission portion 43. The fluctuation of the transmission torque is more reduced than in the embodiment of Figs. 1(a) to 4(b).

It should be apparent to those skilled in the art that the present invention may be embodied in many other specific forms without departing from the spirit or scope of the invention. Particularly, it should be understood that the invention may be embodied in the following forms,.

Instead of the rivets 45, screws may be used to couple the leaf springs 44 to one another. Alternatively, the leaf springs 44 may be welded to one another.

As shown in Figs. 7(a) and 7(b), the spring frame 41 may be formed by a spring loop. The second torque transmission portions 43 are formed by pressing parts of the spring. The second torque transmission portions 43 may be formed before or after the ends of the spring are coupled to each other to form the spring loop. The spring frame 41 of Figs. 7(a) and 7(b) has substantially the same advantages as the spring frame 41 of the embodiment of Figs. 1(a) to 4(b). Compared to the spring frame 41 formed with the leaf springs 44, the spring frame 41 of Figs. 7(a) and 7(b) is easier to manufacture.

The shape of the spring frame 41 is not limited to a square or a pentagon but may be a hexagon or a polygon that has more sides. The transmission torque (disengage torque), at which the second engaging portions 40 are disengaged from the second torque transmission torque portions 43 is determined by the number and the force of the second torque transmission portions 43. Therefore, if the number of the second torque transmission portions 43 is increased, the leaf springs that have relatively smaller elastic force are used for forming the spring frame 41.

Instead of treating the surface of each second engaging portion 40 to improve the durability, a material that has a high durability may be embedded or insert molded in a part of each second engaging portion 40 that is engaged with the spring frame 41.

Each second engaging portion 40 may be shaped such that the portion 40 contacts the corresponding second torque transmission portion 43 at a relatively large area. In other words, the curvature of the part of the second engaging portion 40 that contacts the second torque transmission portion 43 may be equal to the curvature of the second torque transmission portion 43.

The diameter of the first rotor may be smaller than the diameter of the second rotor, the second engaging portions may be located radially outside of the first rotor, and the first engaging portions may be located radially inside of the second rotor.

The present invention may be embodied in a wobble type variable displacement compressor or other piton type compressors such as fixed displacement swash plate type compressor. Alternatively, the present invention may be embodied in a compressor other than piston type compressors (for example, a vane compressor).

Further, the driven device may be a rotational apparatus other than a compressor (for example, a pump).

Therefore, the present examples and embodiments are to be considered as illustrative and not restrictive and the invention is not to be limited to the details given herein, but may be modified within the scope and equivalence of the appended claims.

A torque limiting mechanism for transmitting power of an external drive source (Eg) to the drive shaft of a compressor (C). A coupler member is a spring frame that can be engaged with and disengaged from first and second engaging portions (34, 40). When the spring frame is engaged with the engaging portions, power is transmitted from a pulley to a hub. When the load on the hub is equal to or greater than a predetermined level, the engaging state between the engaging portions and the spring frame changes such that power transmission is discontinued. Thereafter, part of the first and second engaging portions (34, 40) is destroyed such that the spring frame rotates relative to the engaging portions without interfering with the engaging portions.

## Claims

1. A torque limiting mechanism, comprising:
a first rotor (31) coupled to a drive source;
a first engaging portion (34) provided at the first rotor (31);
a second rotor (36) coupled to a driven device;
a second engaging portion (40) provided at the second rotor (36); and
a coupler member that couples the first rotor (31) to the second rotor (36) such that power is transmitted between the rotors, wherein, when the load on the second rotor (36) is equal to or greater then a predetermine level, the coupler member discontinues power transmission, and wherein the coupler member is a spring member (41) that can be engaged with and disengaged from the first and second engaging portions (34, 40);
**characterized in that**, when the spring member (41) is engaged with the first and second engaging portions (34, 40), power is transmitted from the first rotor (31) to the second rotor (36), wherein, when the load on the second rotor (36) is equal to or greater than the predetermined level, the engaging state between the engaging portions and the spring member (41) changes such that the power transmission is discontinued, and, thereafter, a part of the first and second engaging portions (34, 40) is destroyed such that the spring member (41) rotates relative to the engaging portions without interfering with the engaging portions.

2. The torque limiting mechanism according to claim 1, **characterized in that** the torque limiting mechanism includes a plurality of the first engaging portions (34) and a plurality of the second engaging portions (40), wherein the first engaging portions are located coaxial with the second engaging portions.

3. The torque limiting mechanism according to claim 1, **characterized in that** the first engaging portion (34) is an elastic body.

4. The torque limiting mechanism according to claim 1, **characterized in that** the spring member (41) is a loop and includes a first torque transmission portion (42) that is engaged with the first engaging portion (34) and a second torque transmission portion (43) that is engaged with the second engaging portion (40), wherein, when power is being transmitted, each torque transmission portion is held engaged with the corresponding engaging portion, and wherein, when the load on the second rotor (36) is equal to or greater than the predetermined level, the second engaging portion (40) is disengaged from the second torque transmission portion (43).

5. The torque limiting mechanism according to claim 4, **characterized in that** the spring member (41) is substantially a polygon and includes a plurality of corners, wherein the first torque transmission portion (42) is one of a plurality of first transmission portions and the second torque transmission portion (43) is one of a plurality of second torque transmission portions (43), wherein each corner of the polygon forms one of the first torque transmission portions (42), and wherein each second torque transmission portion (43) protrudes in the vicinity of the inside of one of the corners.

6. The torque limiting mechanism according to claim 4, **characterized in that** the second torque transmission portion (43) extends in the circumferential direction of the first rotor (31).

7. The torque limiting mechanism according to claim 4, **characterized in that** the second engaging portion (40) has a roller, wherein the roller can be engaged with the second torque transmission portion (43).

8. The torque limiting mechanism according to claim 1, **characterized in that** the spring member (41) includes a plurality of leaf springs and fasteners for coupling the leaf springs.

9. The torque limiting mechanism according to claim 1, **characterized in that** the first rotor (31) is located radially outside of the second rotor (36), and wherein the first rotor (31) and the second rotor (36) are coaxial.

10. The torque limiting mechanism according to claim 1, **characterized in that** the driven device is a compressor for a vehicle air conditioner, and wherein the second rotor (36) rotates integrally with a drive shaft of the compressor.
